(19) Europäisches Patentamt
European Patent Office
Office européen des brevets

(11) **EP 4 559 566 A1**

(12) **EUROPEAN PATENT APPLICATION**

(43) Date of publication:
**28.05.2025 Bulletin 2025/22**

(21) Application number: **23307022.6**

(22) Date of filing: **21.11.2023**

(51) International Patent Classification (IPC):
**B01D 67/00** (2006.01)    **B01D 53/22** (2006.01)
**B01D 69/08** (2006.01)    **B01D 71/80** (2006.01)
**D01D 5/24** (2006.01)

(52) Cooperative Patent Classification (CPC):
**B01D 71/80; B01D 53/228; B01D 67/0009; B01D 69/08; B01D 69/088; D01D 5/24; D01D 5/247;** B01D 71/52; B01D 71/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Fundación Tecnalia Research & Innovation**
**20009 Donostia - San Sebastián (ES)**
• **Arkema France**
**92800 Puteaux (FR)**
• **Universiteit Maastricht**
**6211 LK  Maastricht (NL)**

(72) Inventors:
• **DAVID, Oana Cristina**
**E- 20009 Donostia - San Sebastián (ES)**
• **BENAVIDES, Miren Etxeberria**
**E- 20009 Donostia - San Sebastián (ES)**
• **OTANO, Sara Miguel**
**E- 20009 Donostia - San Sebastián (ES)**
• **PINEAU, Quentin**
**27470 Serquigny (FR)**
• **BERNAERTS, Katrien V.**
**6229EV Maastricht (NL)**
• **SLECZKOWSKI, Marcin**
**6229EV Maastricht (NL)**

(74) Representative: **Bandpay & Greuter**
**11 rue Christophe Colomb**
**75008 Paris (FR)**

(54) **ASYMMETRIC HOLLOW-RELEASING MEMBRANE FOR GAS SEPARATION BID OF COPOLYMERS WITH POLYAMIDE BLOCKS AND FLEXIBLE BLOCKS**

(57)    The present invention relates to an asymmetric hollow-fiber membrane for gas separation, comprising at least one support layer and at least one gas separation layer, the support layer and the gas separation layer being made of a composition comprising more than 70% by weight of a copolymer comprising polyamide blocks and flexible polyether blocks, wherein:
- the polyether blocks comprises blocks derived from polyethylene glycol (PEG), polypropylene glycol, polytrimethylene glycol, polytetramethylene glycol or mixtures thereof, preferably polyethylene glycol,
- the polyamide blocks comprises at least a unit derived from polycondensation of at least one lactam, of at least one aminocarboxylic acid or of at least one diamine and at least one dicarboxylic acid, and
- the ratio of the thickness of the support layer to the thickness of the gas separation layer is from 1.49 to 10,000.

The invention further relates to the process for producing the asymmetric hollow-fiber membrane.

Fig. 1

**Description**

**FIELD OF THE INVENTION**

The present invention relates to an asymmetric hollow-fiber membrane for gas separation, and to a process for preparing such an asymmetric hollow-fiber membrane.

**TECHNICAL BACKGROUND**

Greenhouse gas emissions and their effects on global warming have become a major concern. Various technologies have been developed to recover the gases responsible for the greenhouse effect, such as carbon dioxide ($CO_2$) and methane ($CH_4$). Among these, gas separation membranes are under development. Gas separation membranes can also be used for many other applications, for example for the purification of natural gas or in new enthalpy heat exchangers.

Currently, polymeric materials are dominant in the market for gas separation applications. For example, copolymers containing polyamide blocks and polyether blocks (also known as PEBAs) have shown good selectivity of $CO_2$ over other light gases.

In general, there are two possible membrane geometries: flat membranes and hollow-fiber membranes. For gas separation applications, hollow-fiber membranes are preferred because they can be packed in a separation module at a much higher density than flat membranes (> 10,000 m$^2$ of membrane surface area per 1 m$^3$ membrane module).

Such gas separation membranes need to be extremely thin to enable high permeating fluxes. To provide mechanical reinforcement, a gas separation membrane is supported on a support part which is porous, thereby forming an asymmetric structure comprising a gas separation part and support part.

Hollow-fiber membranes comprising such an asymmetric structure can be prepared by a multi-step coating procedure such as by preparing a hollow fiber porous support, and then coating a PEBA polymer solution onto the hollow fiber porous support.

For example, Li Liu, et al, Ind. Eng. Chem. Res. 2005, 44, 17, 6874-6882, proposes a PEBA hollow fiber composite membrane for $CO_2/N_2$ separation, prepared by coating a thin layer of PEBA onto a microporous polyetherimide (PEI) hollow fiber substrate.

Document KR101035717B1 discloses a porous PEBA membrane which is useful as a support for gas separation, permeation-evaporation, and vapor permeation.

However, these multi-step coating procedures used to produce an asymmetric hollow-fiber membrane are expensive and complicated. In addition, the asymmetric structure involves the use of a PEBA polymer and other polymers beside the PEBA polymer for the support part and the gas separation part, which further adds complexity to the process and increases the cost.

For a one-step fabrication of such an asymmetric structure comprising a support part and a gas separation part of the same polymer, NIPS (non-solvent induced phase separation) and TIPS (thermal induced phase separation) have been known.

The TIPS process involves solid-liquid phase separation of the polymer solution into polymer-rich and polymer-lean phases, which occurs through a decrease in temperature. Nevertheless, this process raises a problem of forming closed pores filling the space between polymer vesicles.

The NIPS process involves liquid-liquid phase separation, which is induced by a non-solvent. However, this process presents a challenge concerning the compatibility with PEBA copolymers, because it is very difficult to find an optimal process recipe (including process parameters, such as solvents) that works well with PEBA copolymers.

There is thus a need to provide an asymmetric hollow-fiber membrane comprising a PEBA copolymer for gas separation, which provides good gas permeability and selectivity while maintaining the mechanical resistance, and a simple and energy-saving process for preparing such an asymmetric hollow-fiber membrane.

**SUMMARY OF THE INVENTION**

The invention relates firstly to an asymmetric hollow-fiber membrane for gas separation, comprising at least one support layer and at least one gas separation layer, the support layer and the gas separation layer being made of a composition comprising more than 70% by weight of a copolymer comprising polyamide blocks and flexible polyether blocks, wherein:

- the polyether blocks comprises blocks derived from polyethylene glycol (PEG), polypropylene glycol, polytrimethylene glycol, polytetramethylene glycol or mixtures thereof, preferably polyethylene glycol,
- the polyamide blocks comprises at least a unit derived from polycondensation of at least one lactam, of at least one aminocarboxylic acid or of at least one diamine and at least one dicarboxylic acid, and

- the ratio of the thickness of the support layer to the thickness of the gas separation layer is from 1.49 to 10,000.

According to some embodiments, the gas separation layer has a thickness of from 0.05 to 100 μm, and the support layer has a thickness of from 149.95 to 499.95 μm.

According to some embodiments, the asymmetric hollow-fiber membrane has an outer diameter of from 200 to 1000 μm, and an inner diameter of from 50 to 500 μm.

According to some embodiments, the support layer and the gas separation layer are made of the same composition or the same copolymer.

According to some embodiments, the support layer and the gas separation layer are made of different compositions or different copolymers.

According to some embodiments, the polyamide blocks of the copolymer comprises an aliphatic dicarboxylic acid or a diamine comprising 36 carbon atoms.

According to some embodiments, the support layer is a porous layer having a porosity of from 15 to 60%, as measured by a scanning electron microscope (SEM) image analysis.

According to some embodiments, the asymmetric hollow-fiber membrane comprises a supplementary support layer.

The invention further relates to a use of the asymmetric hollow-fiber membrane as described above for gas separation.

The invention further relates to a process for producing the asymmetric hollow-fiber membrane as described above, comprising:

a) supplying at least one polymer solution comprising the copolymer as defined in claims 1 to 10 dissolved in a solvent, wherein the solvent is chosen among N-methyl-2-pyrrolidone, N,N-dimethylformamide, N,N-dimethylacetamide, dimethyl sulfoxide, triethyl phosphate, dihydrolevoglucosenone, triethylene glycol diacetate, 1-butylpyrrolidin-2-one, tetrahydrofuran (THF), 2-methyl tetrahydrofuran, and their mixtures;
b) supplying a bore fluid,
c) co-extruding the at least one polymer solution and the bore fluid downwardly into a coagulation bath, the polymer solution entirely surrounding the bore fluid, and
d) recovering the asymmetric hollow-fiber membrane solidified in the coagulation bath, and
e) drying the recovered asymmetric hollow-fiber membrane by solvent exchange or by lyophilization.

According to some embodiments, the step a) of supplying at least one polymer solution comprises supplying two different polymer solutions, each polymer solution comprising a copolymer as defined above dissolved in a solvent, the copolymers of the two polymer solutions being different from each other or the same.

According to some embodiments, the bore fluid comprises water, preferably the bore fluid is water and a solvent, more preferably the solvent being the same as the solvent of the polymer solution.

According to some embodiments, the step of co-extruding is performed via an air gap, preferably the air gap having a distance of from more than 0 cm and 50 cm or less.

According to some embodiments, the step e) of drying is carried out by solvent exchange, and the solvent exchange is performed with water/acetonitrile/hexane or water/dimethoxymethane/hexane.

According to some embodiments, the polymer solution comprises an additive, preferably lithium chloride and/or PEG.

According to some embodiments, the polymer concentration of the polymer solution is from 10% to 40% by weight relative to the total weight of the polymer solution.

According to some embodiments, the temperature of the step of the co-extruding is from 15°C to 80°C.

The invention further relates to an asymmetric hollow-fiber membrane produced by the process as defined above.

The present invention meets the need expressed above. More particularly, the present invention provides an asymmetric hollow-fiber membrane for gas separation, comprising an asymmetric hollow-fiber membrane for gas separation, comprising at least one support layer and at least one gas separation layer, the support layer and the gas separation layer being made of a composition comprising more than 70% by weight of a copolymer comprising polyamide blocks and flexible polyether blocks, wherein:

- the polyether blocks comprises blocks derived from polyethylene glycol (PEG), polypropylene glycol, polytrimethylene glycol, polytetramethylene glycol or mixtures thereof, preferably polyethylene glycol,
- the polyamide blocks comprises at least a unit derived from polycondensation of at least one lactam, of at least one aminocarboxylic acid or of at least one diamine and at least one dicarboxylic acid, and

- the ratio of the thickness of the support layer to the thickness of the gas separation layer is from 1.49 to 10,000.

This is accomplished by means of the support and porous layers of the PEBA copolymer(s) of the asymmetric hollow-fiber membrane. Such asymmetric hollow-fiber membrane allows for good adhesion between the support layer and the gas separation layer, thereby providing good gas permeability and selectivity while maintaining a good mechanical resistance. The thickness ratio of the asymmetric hollow-fiber membrane can also assure a good balance between the gas separation property and the mechanical resistance of the membrane.

The present invention also provides process for preparing such an asymmetric hollow-fiber membrane, comprising:

a) supplying at least one polymer solution comprising the copolymer as defined as above dissolved in a solvent, wherein the solvent is chosen among N-methyl-2-pyrrolidone, N,N-dimethylformamide, N,N-dimethylacetamide, dimethyl sulfoxide, triethyl phosphate, dihydrolevoglucosenone, triethylene glycol diacetate, 1-butylpyrrolidin-2-one, tetrahydrofuran (THF), 2-methyl tetrahydrofuran, and their mixtures;
b) supplying a bore fluid,
c) co-extruding the at least one polymer solution and the bore fluid downwardly into a coagulation bath, the polymer solution entirely surrounding the bore fluid,
d) recovering the asymmetric hollow-fiber membrane solidified in the coagulation bath, and
e) drying the recovered asymmetric hollow-fiber membrane by solvent exchange or by lyophilization.

The invention further relates to an asymmetric hollow-fiber membrane produced by the process as defined above.

Such a process allows both the support and gas separation layers to be formed simultaneously, thus providing a single-step process for formation of an asymmetric structure comprising a support part and a gas separation part of the PEBA polymer(s). Thus, the process of the invention is simple and energy-efficient compared to the conventional method, such as a multi-step method.

In addition, the inventors have found that the use of a specific solvent and drying of the membrane by solvent exchange or lyophilization is essential for the formation of support and gas separation layers of PEBA copolymer(s) in such a process.

Indeed, the solvent selected from N-methyl-2-pyrrolidone, N,N-dimethylformamide, N,N-dimethylacetamide, dimethyl sulfoxide, triethyl phosphate, dihydrolevoglucosenone (Cyrene™), triethylene glycol diacetate, 1-butylpyrrolidin-2-one (TamiSolve™ or EMPLURA®), tetrahydrofuran (THF), 2-methyl tetrahydrofuran, and mixtures thereof, results in a good dissolution of PEBA polymer(s) in a polymer solution(s). Thus, during the preparation process, the polymer solutions exhibit good fluidity, thus facilitating the preparation process.

Drying by solvent exchange or lyophilization can help maintain open pores more effectively compared to drying the membrane directly from water.

According to certain particular embodiments, the asymmetric hollow-fiber membrane prepared by the process of the invention has one or preferably several of the advantageous features listed below: pores in the support layer which are well interconnected, forming a continuous structure, good mechanical properties, low resistance to gas transport, and good properties for gas separation.

## BRIEF DESCRIPTION OF THE FIGURES

FIG. 1 schematically illustrates cross-sections of two examples of the asymmetric hollow-fiber membrane according to the invention, taken in the direction perpendicular to the longitudinal axis of the membrane.

FIG. 2 schematically illustrates cross-sections of other two additional examples of the asymmetric hollow-fiber membrane according to the invention, taken in the direction perpendicular to the longitudinal axis of the membrane.

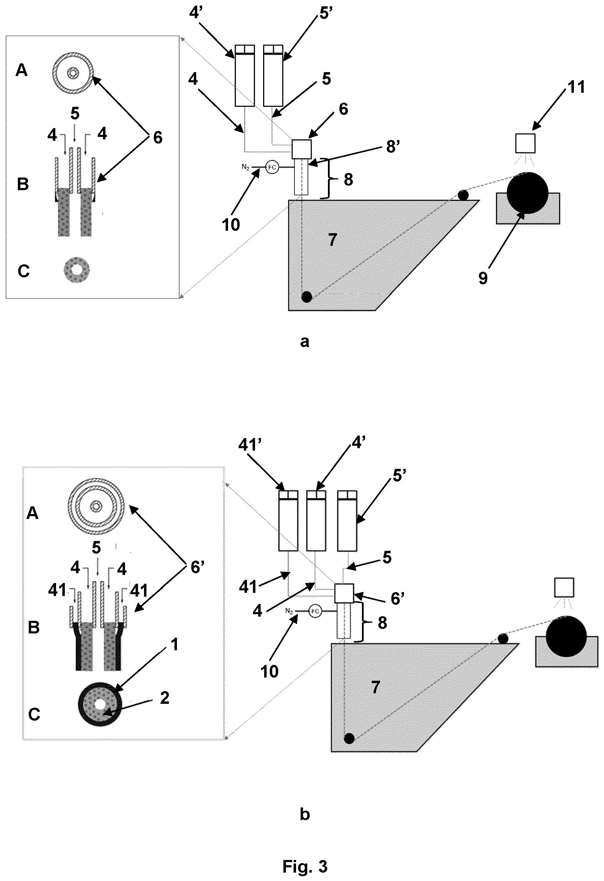

FIG. 3 schematically illustrates the process according to the invention. **FIG. 3a** shows co-extrusion of one polymer solution while **FIG. 3b** shows co-extrusion of two polymer solutions. In **FIG. 3a,** an enlarged view of the co-extrusion step through a double spinneret is shown on the left side (inside a rectangle). In this enlarged view, **A** shows the cross-section of the spinneret, taken in the direction perpendicular to the flow direction inside the spinneret; **B** shows the cross-section of the spinneret, taken along the flow direction inside the spinneret; and **C** shows the cross-section of a nascent hollo-fiber membrane, taken in the direction perpendicular to the flow direction inside the spinneret. Likewise, In **FIG. 3b,** an enlarged view of the co-extrusion step through a triple spinneret is shown on the left side (inside a rectangle). In this enlarged view, **A** shows the cross-section of the spinneret, taken in the direction perpendicular to the flow direction inside the spinneret; **B** shows the cross-section of the spinneret, taken along the flow direction inside the spinneret; and **C** shows the cross-section of a nascent hollo-fiber membrane, taken in the direction perpendicular to the flow direction inside the spinneret.

**FIG. 4** shows scanning electron microscope (SEM) images of another example of the asymmetric hollow-fiber membrane according to the invention. **FIG. 4A** shows the cross-section of asymmetric hollow-fiber membrane, taken in the direction perpendicular to the longitudinal axis of the membrane; **FIG. 4B** shows an enlarged section of **FIG. 4A**.

## DETAILED DESCRIPTION

The invention is now described in greater detail and in a nonlimiting manner in the description that follows.

Unless otherwise indicated, all the percentages are weight (mass) percentages. It is further indicated that the expressions "between... and..." and "from... to..." used in the present description must be understood as including each of the indicated limits.

The invention relates to an asymmetric hollow-fiber membrane for gas separation, comprising at least one support layer, and at least one gas separation layer, the support layer and the gas separation layer being made of a composition comprising more than 70% by weight of a copolymer comprising polyamide blocks and flexible polyether blocks.

*Copolymer*

The copolymer of the invention contains polyamide blocks and flexible polyether blocks. These copolymers are thermoplastic elastomer (TPE) polymers comprising blocks that are rigid (or hard, with rather thermoplastic behavior) and blocks that are flexible (or soft, with rather elastomeric behavior).

The term "copolymer" refers to a polymer that is made up of more than one type of monomer, including a polymer derived from two monomers and a polymer derived from three or more monomers (also referred to as terpolymer).

The nomenclature used to define the polyamides is described in ISO standard 1874-1:2011 "Plastiques - Matériaux polyamides (PA) pour moulage et extrusion - Partie 1: Designation", in particular on page 3 (Tables 1 and 2) and is well known to the person skilled in the art.

Generally, polyamides comprise at least two identical or different repeating units, where these units are obtained from residues of an aminocarboxylic acid (also referred to as amino acid), a lactam or a dicarboxylic acid (also referred to as carboxylic diacid or diacid) and a diamine.

The polyamide blocks comprise at least one unit derived from polycondensation of at least one lactam; at least one aminocarboxylic acid; or at least one diamine and at least one dicarboxylic acid.

In the notation PA XY, X designates a linear or branched aliphatic, cycloaliphatic or aromatic diamine residue containing x carbon atoms (Cx diamine) and Y designates a linear or branched aliphatic, cycloaliphatic or aromatic diacid residue containing y carbon atoms (Cy diacid), as is conventional.

In the notation PA Z, Z represents the number of carbon atoms derived from amino acid residues or lactam residues.

*Polyamide blocks*

The polyamide block is a semicrystalline polyamide.

The term "polyamide" covers both homopolyamides and copolyamides.

The term "semicrystalline polyamide" refers to a type of polyamide that exhibits a combination of crystalline and amorphous regions in its molecular structure.

The polyamide blocks comprises at least a unit derived from polycondensation of at least one lactam, of at least one aminocarboxylic acid or of at least one diamine and at least one dicarboxylic acid.

Specifically, the polyamide blocks may originate from the condensation of a dicarboxylic acid, in particular those containing from 4 to 36 carbon atoms, preferably those containing from 6 to 18 carbon atoms, and of an aliphatic or aromatic diamine, in particular those containing from 2 to 20 carbon atoms, preferably those containing from 6 to 14 carbon atoms.

The dicarboxylic acid may be chosen from 1,4-cyclohexanedicarboxylic acid, butanedioic acid, adipic acid, azelaic acid, suberic acid, sebacic acid, dodecanedicarboxylic acid, octadecanedicarboxylic acid, terephthalic acid, and isophthalic acid, but also dimerized fatty acids. These dimerized fatty acids preferably have a dimer content of at least 98%; they are preferably hydrogenated; they are, for example, products sold under the brand name Pripol by the company Cargill, or under the brand name Empol by the company BASF, or under the brand name Radiacid by the company Oleon.

The diamines may be chosen from tetramethylenediamine, hexamethylenediamine, 1,10-decamethylenediamine, dodecamethylenediamine, trimethylhexamethylenediamine, the isomers of bis(4-aminocyclohexyl)methane (BACM), bis(3-methyl-4-aminocyclohexyl)methane (BMACM), and 2,2-bis(3-methyl-4-aminocyclohexyl)propane (BMACP), para-am inodicyclohexylmethane (PACM), isophoronediamine (IPDA), 2,6-bis(aminomethyl)norbornane (BAMN), and piperazine (Pip).

For example, the polyamide blocks may be chosen from PA 412, PA 414, PA 418, PA 610, PA 612, PA 614, PA 618, PA 912, PA 1010, PA 1012, PA 1014, and PA 1018. The notation PAXY is as explained above.

Alternatively, the polyamide blocks may originate from the condensation of one or more α,ω-aminocarboxylic acids and/or from one or more lactams containing from 7 to 12 carbon atoms in the presence of a dicarboxylic acid containing from 4 to 12 carbon atoms or of a diamine, such PA 11 (polyundecanamide) or of PA 12 (polydodecanamide).

The lactams may be chosen from enantholactam, lauryllactam, caprolactam, and oenantholactam.

The α,ω-aminocarboxylic acids may be chosen from 7-aminoheptanoic acid, 11-aminoundecanoic acid and 12-aminododecanoic acid.

Alternatively, the polyamide blocks may result from the condensation of at least one α,ω-aminocarboxylic acid (or a lactam), at least one diamine and at least one dicarboxylic acid.

For example, the polyamide blocks may be chosen from PA 66/610/11/12, PA 6/11, PA 6/12, PA 11/12, in which 66 denotes hexamethylenediamine condensed with adipic acid; 610 denotes hexamethylenediamine condensed with sebacic acid; 11 denotes units resulting from the condensation of aminoundecanoic acid; 12 denotes units resulting from the condensation of lauryllactam; 6 denotes units resulting from the condensation of caprolactam. The slash / in the notations PA X/Y, PA X/Y/Z, and so on, represents copolyamides in which X, Y, Z represent homopolyamide units as described above.

Advantageously, the polyamide blocks may contain aliphatic dicarboxylic acid and/or diamine comprising 36 carbon atoms.

The polyamide blocks may preferably contain from 30 to 75% by weight, preferably from 30 to 70% by weight, and more preferably from 35 to 70% by weight, of such aliphatic dicarboxylic acid and/or diamine comprising 36 carbon atoms, relative to the total weight of polyamide blocks. The weight proportion of the aliphatic dicarboxylic acid or diamine comprising 36 carbon atoms may be determined by DSC (differential scanning calorimetry) or NMR (nuclear magnetic resonance) analysis.

The aliphatic dicarboxylic acid or diamine comprising 36 carbon atoms may be a component of a monomer unit or a chain limiter of the polyamide blocks.

The term "chain limiter" refers to a molecule or functional group that terminates the growth of a polymer chain during its synthesis. The use of such chain limiters makes it possible to control the molecular weight and length of the polymer chains of the polyamide blocks.

Preferably, the polyamide blocks comprise a unit X.36 or a unit 36.Y, wherein:

- X designates a linear or branched aliphatic, cycloaliphatic or aromatic diamine containing x carbon atoms,
- 36 designates an aliphatic dicarboxylic acid or an aliphatic diamine comprising 36 carbon atoms, and
- Y designates a linear or branched aliphatic, cycloaliphatic or aromatic dicarboxylic acid containing y carbon atoms, or

the aliphatic dicarboxylic acid and/or diamine comprising 36 carbon atoms is a chain limiter of the semi-crystalline polyamide blocks.

The diacid containing 36 carbon atoms is sold under the trademark Pripol® 1009 by the company Cargill.

The diamine containing 36 carbon atoms is sold under the trademark Priamine® 1075 by the company Cargill.

Preferably, the polyamide blocks of the copolymer according to the invention may comprise the following units:

- PA X36, PA X36/X1 Y1, PA X36/Z,
- PA 36Y, PA 36Y/X2Y2, PA 36Y/Z,
- PA XY with diamine or diacid comprising 36 carbon atoms as a chain limiter, PA X.Y/Z with diamine or diacid comprising 36 carbon atoms as chain limiter,
- PA Z with diamine or diacid comprising 36 carbon atoms as chain limiter,
- or the copolymer thereof, wherein:

with X being a linear or branched aliphatic, cycloaliphatic or aromatic diamine, in particular those containing from 2 to 36 carbon atoms, preferably those containing from 10 to 36 carbon atoms,
with Y being a linear or branched aliphatic, cycloaliphatic or aromatic dicarboxylic acid, in particular those containing from 4 to 36 carbon atoms, preferably those containing from 6 to 36 carbon atoms,
with Z being one or more α,ω-aminocarboxylic acids and/or from one or more lactams containing from 7 to 12 carbon atoms,
with X1 and X2 being a linear or branched aliphatic, cycloaliphatic or aromatic diamine, in particular those containing from 2 to 36 carbon atoms, preferably those containing from 10 to 36 carbon atoms,
with Y1 and Y2 being a linear or branched aliphatic, cycloaliphatic or aromatic dicarboxylic acid, in particular those containing from 4 to 36 carbon atoms, preferably those containing from 6 to 36 carbon atoms,
with X1 being a diamine identical or different from X and Y1 being a diacid different from 36,
with X2 being a diamine different from 36 and Y2 being a diacid identical or different from Y.

The polyamide blocks containing aliphatic dicarboxylic acid comprising 36 carbon atoms may be at least one of the following formulae: PA X36, PA X36/X1Y1, PA X36/Z.

In these formulae, X means a linear or branched aliphatic, cycloaliphatic or aromatic diamine, in particular those containing from 2 to 36 carbon atoms, preferably those containing from 10 to 36 carbon atoms.

Preferably, X may be chosen from butanediamine (x=4), pentanediamine (x=5), hexanediamine (x=6), heptanediamine (x=7), octanediamine (x=8), nonanediamine (x=9), decanediamine (x=10), undecanediamine (x=11), dodecanediamine (x=12), tridecanediamine (x=13), tetradecanediamine (x=14), hexadecanediamine (x=16), and octadecanediamine (x=18), the isomers of bis(4-aminocyclohexyl)methane (BACM), bis(3-methyl-4-aminocyclohexyl)methane (BMACM), and 2,2-bis(3-methyl-4-aminocyclohexyl)propane (BMACP), para-aminodicyclohexylmethane (PACM), isophoronediamine (IPDA), 2,6-bis(aminomethyl)norbornane (BAMN) and piperazine (Pip) and dimer diamines.

The formula PA X36/X1Y1 represents a copolyamide block with X1 being a diamine identical or different from X and Y1 being a diacid different from 36.

Y1 means a linear or branched aliphatic, cycloaliphatic or aromatic dicarboxylic acid, in particular those containing from 4 to 18 carbon atoms, preferably those containing from 6 to 18 carbon atoms.

Preferably, Y1 may be chosen from succinic acid ($y_1$=4), pentanedioic acid ($y_1$=5), adipic acid ($y_1$=6), heptanedioic acid ($y_1$=7), octanedioic acid ($y_1$=8), azelaic acid ($y_1$=9), sebacic acid ($y_1$=10), undecanedioic acid ($y_1$=11), dodecanedioic acid ($y_1$=12), brassylic acid ($y_1$=13), tetradecanedioic acid ($y_1$=14), hexadecanedioic acid ($y_1$=16), and octadecanedioic acid ($y_1$=18), terephthalic acid and isophthalic acid.

Advantageously, the unit X1Y1 may be chosen among PA 11, PA 12, PA 54, PA 59, PA 510, PA 512, PA 513, PA 514, PA 516, PA 518, PA 64, PA 69, PA 610, PA 612, PA 613, PA 614, PA 616, PA 618, PA 104, PA 109, PA 1010, PA 1012, PA 1013, PA 1014, PA 1016, PA 1018, PA 10T, PA 124, PA 129, PA 1210, PA 1212, PA 1213, PA 1214, PA 1216, PA 1218, PA 12T, PA 366.

The formula PA X36/Z represents a copolyamide block with Z being a lactam or an amino acid described above.

Preferably, examples of unit Z include pyrrolidinone (z = 4), 2-piperidinone (z = 5), enantholactam (z = 7), caprylolactam (z = 6), pelargolactam, decanolactam (z = 10), undecanolactam (z = 11), and lauryllactam (z = 12), 7-aminoheptanoic acid (z = 7), 10-aminodecanoic acid (denoted 10, z = 10), 11-aminoundecanoic acid (denoted 11, z = 11) and 12-aminododecanoic acid (denoted 12, z = 12).

The polyamide blocks containing aliphatic dicarboxylic acid comprising 36 carbon atoms may be of the following formulae: PA 36Y, PA 36Y/X2Y2, PA 36Y/Z.

In these formulae, Y means a linear or branched aliphatic, cycloaliphatic or aromatic diacid, in particular those containing from 2 to 36 carbon atoms, preferably those containing from 10 to 36 carbon atoms.

Preferably, Y may be chosen from succinic acid (y=4), pentanedioic acid (y=5), adipic acid (y=6), heptanedioic acid (y=7), octanedioic acid (y=8), azelaic acid (y=9), sebacic acid (y=10), undecanedioic acid (y=11), dodecanedioic acid (y=12), brassylic acid (y=13), tetradecanedioic acid (y=14), hexadecanedioic acid (y=16), and octadecanedioic acid (y=18), terephthalic acid and isophthalic acid, but also dimerized fatty acids.

The formula PA 36Y/X2Y2 represents a copolyamide block with X2 being a diamine different from 36 and Y2 being a diacid identical or different from Y.

X2 means a linear or branched aliphatic, cycloaliphatic or aromatic diamine, in particular those containing from 2 to 18 carbon atoms, preferably those containing from 10 to 18 carbon atoms.

Preferably, X2 may be chosen from butanediamine ($x_2$=4), pentanediamine ($x_2$=5), hexanediamine ($x_2$=6), heptanediamine ($x_2$=7), octanediamine ($x_2$=8), nonanediamine ($x_2$=9), decanediamine ($x_2$=10), undecanediamine ($x_2$=11), dodecanediamine ($x_2$=12), tridecanediamine ($x_2$=13), tetradecanediamine ($x_2$=14), hexadecanediamine ($x_2$=16), and octadecanediamine ($x_2$=18), the isomers of bis(4-aminocyclohexyl)methane (BACM), bis(3-methyl-4-aminocyclohexyl)methane (BMACM), and 2,2-bis(3-methyl-4-aminocyclohexyl)propane (BMACP), para-aminodicyclohexylmethane (PACM), isophoronediamine (IPDA), 2,6-bis(aminomethyl)norbornane (BAMN) and piperazine (Pip).

Advantageously, the unit X2Y2 may be chosen among PA 11, PA 12, PA 54, PA 59, PA 510, PA 512, PA 513, PA 514, PA 516, PA 518, PA 536, PA 64, PA 69, PA 610, PA 612, PA 613, PA 614, PA 616, PA6.18, PA 636, PA 104, PA 109, PA 1010, PA 1012, PA 1013, PA 1014, PA 1016, PA 1018, PA 1036, PA 10T, PA1136, PA 124, PA 129, PA 1210, PA 12.12, PA 12.13, PA 1214, PA 1216, PA 1218, PA 1236, PA 12T.

The formula PA 36Y/Z represents a copolyamide block with Z being a lactam or an amino acid described above.

Preferably, examples of the unit Z include pyrrolidinone (z = 4), 2-piperidinone (z = 5), enantholactam (z = 7), caprylolactam (z = 6), pelargolactam, decanolactam (z = 10), undecanolactam (z = 11), and lauryllactam (z = 12), 7-aminoheptanoic acid (z = 7), 10-aminodecanoic acid (denoted 10, z = 10), 11-aminoundecanoic acid (denoted 11, z = 11) and 12-aminododecanoic acid (denoted 12, z = 12).

The polyamide block may also be a terpolyamide, a tetrapolyamide or a pentapolyamide or copolyamide having more than 5 different units. The units may be in the form of XY (diamine.diacid) or Z (lactam or aminoacid), for example X36/X1Y1/Z1/Z2, X36/X1Y1/X2Y2/Z1, X36/X1Y1/X2Y2/Z1/Z2, 36Y/X1Y1/Z1/Z2, 36Y/X1Y1/X2Y2/Z1, 36Y/X1Y1/X2-Y2/Z1/Z2.

As examples copolyamide having 2 or more different units, mention may be made of PA 11/536, PA 11/1036, PA 11/636, PA 11/1236, PA 6/536, PA 6/1036, PA 6/636, PA 6/1236, PA 12/536, PA 12/1036, PA 12/636, PA 5.36/10.36, PA 536/636, PA 536/1236, PA 1036/636, PA 1036/1236, PA 636/1236, PA 11/12/6, PA 11/6/1236, PA 6/11/1036, PA 536/1036/6, and PA 12/536/636, preferably PA 11/1036.

According to another embodiment, the aliphatic dicarboxylic acid and/or diamine comprising 36 carbon atoms may be present as chain limiter of the polyamide blocks. The polymer chain may be illustrated as follows: -36-PA-36.

According to this embodiment, the polyamide blocks may comprise PA XY (diamine.diacid), PA Z (lactam or aminoacid), or the copolymer thereof, with X, Y and Z being defined above.

Preferably, the polyamide blocks are chosen among PA 6, PA 11, PA 12, PA 536, PA 1036, PA 636, PA1136, PA 1236, PA 366, PA 11/1036, PA 1012/1036, PA 1010/1036, PA 610/636, PA 612/636, PA 613/636, PA 69/636.

The number-average molar mass of the polyamide blocks in the copolymer according to the invention is preferably from 400 to 20 000 g/mol, more preferably 500 to 10 000 g/mol, and even more preferably 600 to 2500 g/mol. In certain embodiments, the number-average molar mass of the rigid polyamide blocks in the copolymer is from 400 to 500 g/mol, or from 500 to 1000 g/mol, or from 1000 to 1500 g/mol, or from 1500 to 2000 g/mol, or 2000 to 2500 g/mol, or 2500 to 3000 g/mol, or 3000 to 3500 g/mol, or 3500 to 4000 g/mol, or 4000 to 5000 g/mol, or from 5000 to 6000 g/mol, or from 6000 to 7000 g/mol, or from 7000 to 8000 g/mol, or from 8000 to 9000 g/mol, or from 9000 to 10 000 g/mol, or from 10 000 to 11 000 g/mol, or from 11 000 to 12 000 g/mol, or from 12 000 to 13 000 g/mol, or from 13 000 to 14 000 g/mol, or from 14 000 to 15 000 g/mol, or from 15 000 to 16 000 g/mol, or from 16 000 to 17 000 g/mol, or from 17 000 to 18 000 g/mol, or from 18 000 to 19 000 g/mol, or from 19 000 to 20 000 g/mol.

The number-average molar mass is set by the content of chain limiter. It may be calculated according to the equation:

$$M_n = n_{monomer} \times MW_{repeating\ unit} / n_{chain\ limiter} + MW_{chain\ limiter.}$$

In this formula, $n_{monomer}$ represents the number of moles of monomer, $n_{chain\ limiter}$ represents the number of moles of the chain limiter (for example diacid) in excess, $MW_{repeating}$ unit represents the molar mass of the repeating unit, and $MW_{chain\ limiter}$ represents the molar mass of the limiter (for example diacid) in excess. The number-average molar mass of the polyamide blocks can be measured before the copolymerization of the blocks by gel permeation chromatography (GPC). The number-average molar mass of the polyol blocks may be determined by measuring the hydroxyl number.

*Flexible polyether block*

The term "flexible block" means a block with a glass transition temperature (Tg) of less than or equal to 0° C. The glass transition temperature may be determined by differential scanning calorimetry, according to the standard ISO 11357-2 Plastics-Differential scanning calorimetry (DSC) Part 2.

The flexible polyether blocks comprises blocks derived from polyethylene glycol (PEG), polypropylene glycol, polytrimethylene glycol, polytetramethylene glycol or and mixtures thereof.

Preferably, the flexible blocks of the copolymer comprises blocks derived from polyethylene glycol (PEG).

In certain embodiments, the flexible blocks of the copolymer according to the invention may consist of blocks derived from PEG.

Alternatively, the flexible blocks of the copolymer may contain at least one other block in addition to the blocks derived from PEG.

In certain embodiments, the flexible blocks of the copolymer may comprise at least 50% by weight, preferably at least 60% by weight, or even more preferably at least 80% by weight of blocks derived from PEG, relative to the total weight of the flexible blocks.

The flexible blocks of the copolymer may also comprise, in addition to the blocks derived from PEG, one or more other polyethers and/or polyesters and/or polysiloxanes and/or polydimethylsiloxanes (or PDMS) and/or polyolefins and/or polycarbonates. Possible flexible blocks are described, for example, in French patent application FR 2941700 A1, from page 32 line 3 to page 33 line 8, from page 34 line 16 to page 37 line 13 and on page 38 lines 6 to 23.

Preferably, this other block is a polyether block other than a block derived from PEG and/or a polyester block.

The copolymers may comprise in their chain several types of polyethers other than a block derived from PEG, the corresponding copolyethers possibly being block or random copolyethers.

As polyether blocks other than a block derived from PEG, which are suitable for the invention, mention may be made of blocks derived from PPG (polypropylene glycol) consisting of propylene oxide units, blocks derived from PO3G (polytrimethylene glycol) consisting of polytrimethylene glycol ether units and blocks derived from PTMG (polytetramethylene glycol) consisting of tetramethylene glycol units, also called polytetrahydrofuran, or any combination thereof. Particularly preferably, the polyether block is a block derived from polypropylene glycol and/or from polytetrahydrofuran.

It is also possible to use, as polyether other than PEG, blocks obtained by oxyethylation of bisphenols, for instance bisphenol A. These latter products are notably described in EP 613919.

The polyether blocks may also consist of ethoxylated primary amines. As examples of ethoxylated primary amines, mention may be made of the products of formula:

$$H\text{-}(OCH_2CH_2)_m\text{-}N((CH_2)_xCH_3)\text{-}(CH_2CH_2O)_n\text{-}H$$

in which m and n are integers between 1 and 20 and x is an integer between 8 and 18. These products are commercially available, for example, under the brand name Noramox® from the company Arkema and under the brand name Genamin® from the company Clariant.

The flexible blocks may further comprise polyoxyalkylene polyether blocks bearing $NH_2$ chain ends, such blocks being obtainable by cyanoacetylation of aliphatic $\alpha,\omega$-dihydroxylated polyoxyalkylene blocks known as polyetherdiols. More particularly, the commercial products Jeffamine or Elastamine may be used (for example Jeffamine® D400, D2000, ED 2003, XTJ 542, which are commercial products from the company Huntsman, also described in JP 2004/346274, JP 2004/352794 and EP 1482011).

The polyetherdiol blocks may be either used in unmodified form and copolycondensed with polyamide blocks bearing carboxylic end groups, or are aminated to be converted into polyetherdiamines and condensed with polyamide blocks bearing carboxylic end groups.

The number-average molar mass of the flexible blocks is preferably from 200 to 6000 g/mol, more preferably from 500 to 3000 g/mol, and even more preferably from 600 to 2000 g/mol. In certain embodiments, the number-average molar mass of the flexible blocks is from 200 to 500 g/mol, or from 500 to 800 g/mol, or from 800 to 1000 g/mol, or from 1000 to 1500 g/mol, or from 1500 to 2000 g/mol, or from 2000 to 2500 g/mol, or from 2500 to 3000 g/mol, or from 3000 to 3500 g/mol, or from 3500 to 4000 g/mol, or from 4000 to 4500 g/mol, or from 4500 to 5000 g/mol, or from 5000 to 5500 g/mol, or from 5500 to 6000 g/mol.

The number-average molar mass of the flexible blocks can be measured as described above before the copolymerization of the blocks by gel permeation chromatography (GPC). The number-average molar mass of the polyol blocks may be determined by measuring the hydroxyl number.

*PEBA copolymers*

The copolymer according to the invention may be a linear or branched copolymer. For example, the copolymer may be a branched copolymer in which the branchings are made by a polyol residue with a functionality of greater than 2 (i.e. the polyol includes at least three hydroxyl groups) bonding polyamide blocks of the copolymer.

Advantageously, the melting point of the copolymer of the invention is equal to or higher than 80°C, preferably 85°C, more preferably equal to or higher than 90°, even more preferably equal to or higher than 100°. The melting point may be determined by differential scanning calorimetry, according to the standard ISO 11357-3 Plastics-Differential scanning calorimetry (DSC) Part 3, during the heating stage at a speed of 20°C/min.

The copolymers according to the present invention may include copolymers comprising three, four (or even more) different blocks chosen from those described in the present description, provided that these blocks include at least polyamide blocks and polyether blocks. The copolymer of the invention may be also referred to as *"PEBA copolymer"*.

For example, the copolymer according to the invention may be a segmented block copolymer comprising three different types of blocks (or "triblock" copolymer), which results from the condensation of several of the blocks described above. Said triblock may be, for example, a copolymer comprising a polyamide block, a flexible polyether block, preferably derived from PEG, and a polyester block, or a copolymer comprising a polyamide block, a flexible polyether block, preferably derived from PEG, and a block derived from PTMG.

In a particularly advantageous manner, the copolymers according to the invention comprises, or consists of, polyamide blocks of PA 11, PA 10.36, PA 11/1036, or PA 366, flexible blocks derived from PEG, or any mixture or combination thereof, provided that the polyamide blocks contain from 30 to 70% by weight, preferably from 30 to 70%, and more preferably from 35 to 70% by weight of aliphatic dicarboxylic acid or diamine comprising 36 carbon atoms, relative to the total weight of polyamide blocks.

Copolymers that are preferred in the context of the invention are copolymers including blocks (or consisting of blocks):

- PA 11 and blocks derived from PEG;
- PA 11, blocks derived from PEG and blocks derived from PTMG;
- PA 12 and blocks derived from PEG;
- PA 12, blocks derived from PEG and blocks derived from PTMG;
- PA 6/11 and blocks derived from PEG;
- PA 6/11 and blocks derived from PEG and blocks derived from PTMG;
- PA 6.10 and blocks derived from PEG;
- PA 6.10 and blocks derived from PEG and blocks derived from PTMG;
- PA 6/12 and blocks derived from PEG;
- PA 6/12 and blocks derived from PEG and blocks derived from PTMG.

Copolymers that are particularly preferred in the context of the invention are copolymers including blocks (or consisting of blocks):

- PA 11 and blocks derived from PEG, said PA 11 containing C36 dicarboxylic acid as a chain limiter;
- PA 1036 and blocks derived from PEG;
- PA 11/1036 and blocks derived from PEG;
- PA 366 and blocks derived from PEG.

In these copolymers, the polyamide blocks contains from 30 to 70% by weight, preferably from 30 to 70% by weight, and more preferably from 35 to 70% by weight of C36 dicarboxylic acid (in the case of PA 11/PEG (as a chain limiter), PA 1036/PEG, PA 11/1036/PEG) or C36 diamine (in the case of PA 365/PEG), relative to the total weight of polyamide blocks.

Advantageously, the copolymers PA 1036/PEG and PA 11/1036/PEG may also comprise a chain limiter, preferably a C36 dicarboxylic acid. Likewise; the polymer PA 365/PEG may also comprise a chain limiter, preferably a C6 dicarboxylic acid.

The copolymer according to the invention may comprise from 55% to 90% by weight of flexible polyether blocks and from 10% to 45% by weight of rigid polyamide blocks, relative to the total weight of the copolymer. The weight proportions of the polyamide blocks and of the flexible blocks in the copolymer may be determined by DSC or NMR analysis.

Advantageously, the weight proportion of the polyamide blocks may be from 15 to 60%, preferably from 20 to 50%, more preferably 30 to 50%, relative to the total weight of the copolymer, and the weight proportion of the flexible blocks may be of from 40 to 85%, preferably from 30 to 60%, more preferably from 35 to 60%, relative to the total weight of the copolymer.

In the copolymer according to the invention, the number-average molecular weight of the polyamide blocks may be advantageously from 400 to 20 000 g/mol, preferably 500 to 10 000 g/mol, more preferably 600 to 2500 g/mol, and the number-average molecular weight of the flexible blocks may be from 200 to 6000 g/mol, preferably 500 to 3000 g/mol, more preferably 600 to 2000 g/mol.

The copolymers as described above may be prepared according to a conventional copolymer synthesis method well known in the domain, such as a "two-step" preparation process (comprising a first step of synthesis of the polyamide blocks then a second step of condensation of the polyamide blocks and the flexible blocks) or by a "one-step" preparation process.

*Composition*

The composition of the invention comprises more than 70% by weight of at least one copolymer as described above.

For example, the composition may comprise 75% or more, 80% or more, 90% or more, or 95% or more by weight of the copolymer(s) as described above.

The composition may consists essentially of, or consists of, a copolymer as described above.

The composition of the invention may further comprise at least one additive selected from coloring agents, UV stabilizers, anti-aging agents, antioxidants, fluidizing agents, anti-abrasion agents, mold-release agents, stabilizers, plasticizers, impact modifiers, surfactants, brighteners, fillers, fibers, waxes, and mixtures thereof.

In certain embodiments, the composition may comprise from 0.01% to 30% by weight of such additive(s) relative to the total weight of the composition.

*Asymmetric hollow-fiber membrane*

The term "hollow-fiber membrane" means a membrane in the form of a hollow fiber. The term "hollow fiber" means a fiber with a structure having an inner empty space, such as channel or hole, surrounded by the membrane.

The term "asymmetric hollow-fiber membrane" means that the membrane comprises a support part and a gas separation part having different thickness, thereby forming an asymmetric structure. The term "asymmetric structure" means that the two layers are arranged along the radial direction of the hollow-fiber membrane, where one layer is positioned on the inner side of the hollow-fiber membrane (i.e., the surface facing the external environment) and the other layer is positioned on the outer side of the hollow-fiber membrane (i.e., the surface facing the inner empty space).

The asymmetric hollow-fiber membrane according to the invention comprises at least one support layer and at least one gas separation layer made of a composition comprising more than 70% by weight of a PEBA copolymer, as explained above, the ratio of the thickness of the support layer to the thickness of the gas separation layer being from 1.49 to 10,000.

The PEBA copolymer and the composition comprising such a PEBA copolymer are as defined above.

The term "support layer" means a layer which acts as a mechanical support for the gas separation layer. The support layer is a porous layer having pores or openings, and thus imparts little resistance to gas flow and does not impact gas selectivity.

The term "gas separation layer" means a selective layer which provides gas permeability and gas selectivity of the hollow-fiber membrane, and thus mediates the gas separation. The gas separation layer forms a dense layer which imparts a flow resistance and determines the gas selectivity of the membrane.

In the asymmetric hollow-fiber membrane according to the invention, the ratio of the thickness of the support layer to the thickness of the gas separation layer is from 1.49 to 10,000, preferably from 2.9 to 10,000, more preferably from 10 to 5,000, even more preferably from 10 to 2,000. The ratio of the thickness may be obtained by measuring the thickness of the support layer and the thickness of the gas separation layer. The thickness of each layer may be determined according to a conventional method known in the art. For example, a scanning electron microscope may be used to capture high-resolution images of a cross-section of the hollow-fiber membrane, and the thickness may be measured directly from the images using a conventional image analysis software. When the asymmetric hollow-fiber membrane comprises two or more gas separation layers and/or two or more support layers, the above ratio corresponds to the ratio of the total thickness of the support layers to the total thickness of the gas separation layers.

In the asymmetric hollow-fiber membrane according to the invention, the gas separation layer has a thickness of from 0.05 to 100 $\mu$m, preferably from 0.05 to 50 $\mu$m, and the support layer has a thickness of from 149.95 to 500 $\mu$m. For example, the gas separation layer may have a thickness of from 0.1 to 1 $\mu$m, from 1 to 5 $\mu$m, from 5 to 10 $\mu$m, from 10 to 15 $\mu$m, from 15 to 20 $\mu$m, from 20 to 25 $\mu$m, from 25 to 30 $\mu$m, from 30 to 35 $\mu$m, from 35 to 40 $\mu$m, from 40 to 45 $\mu$m, or from 45 to 50 $\mu$m. The support layer may have a thickness of from 149.95 to 150 $\mu$m, from 150 to 200 $\mu$m, from 200 to 250 $\mu$m, from 250 to 300 $\mu$m, from 300 to 350 $\mu$m, from 350 to 400 $\mu$m, from 400 to 450 $\mu$m, or from 450 to 500 $\mu$m. When the asymmetric hollow-fiber membrane comprises two or more gas separation layers and/or two or more support layers, the above thickness of the gas separation layer or support layer refers to the total thickness of the gas separation layers or support layers.

The hollow-fiber membrane according to the invention may have an outer diameter of from 200 to 1000 $\mu$m, and an inner diameter of from 50 to 500 $\mu$m. For example, the outer diameter may be from 200 to 300 $\mu$m, from 300 to 400 $\mu$m, from 400 to 500 $\mu$m, from 500 to 600 $\mu$m, from 600 to 700 $\mu$m, from 700 to 800 $\mu$m, from 800 to 900 $\mu$m, or from 900 to 1000 $\mu$m. The inner diameter may be from 50 to 100 $\mu$m, from 150 to 200 $\mu$m, from 250 to 300 $\mu$m, from 350 to 400 $\mu$m, or from 450 to 500 $\mu$m.

The inner diameter and the outer diameter may be measured according to a conventional method known in the art, for example, by using an optical microscope, or a scanning electron microscope (SEM) as described above.

In certain embodiments, the support layer may have a porosity of from 15 to 60%. For example, the support layer may have a porosity of from 15 to 20%, from 20 to 25%, from 25 to 30%, from 30 to 35%, from 35 to 40%, from 40 to 50%, or from 50 to 60%.

The porosity of the layer may be measured according to a conventional method known in the art, for example, by way of image analysis. For example; high-resolution images of a cross-section of the hollow-fiber membrane may be obtained using a scanning electron microscope (SEM), and the images may be processed to enhance contrast and converted into a binary image, in which the porous regions are separated from the dense regions on pixel intensity. Then, a conventional image analysis software may be used to measure the porosity by calculating the ratio of the pixels representing the porous regions to the total number of pixels.

In certain embodiments, the gas separation layer may have a porosity of less than 5%. For example, the gas separation layer may have a porosity of from 0.01 to 0.5%, from 0.5 to 1%, from 1 to 1.5%, from 1.5 to 2%, from 2.5 to 3%, from 3 to 3.5%, from 3.5 to 4%, from 4 to 4.5%, or from 4.5 to 4.9%. Advantageously, the gas separation layer is substantially devoid of pores.

In certain embodiments, the asymmetric hollow-fiber membrane consists essentially of, or consists of, a copolymer(s) as described above.

The asymmetric hollow-fiber membrane may also comprise one or more additives chosen from the group consisting of UV stabilizers, crosslinking agents, pigments, metal oxides, zeolites, and mixtures thereof, preferably in a mass amount of from 0.01% to 30% by weight relative to the total weight of the membrane.

In some embodiments, the support layer and the gas separation layer are made of the same copolymer or the same composition comprising the copolymer. In this case, the asymmetric hollow-fiber membrane constitutes a monolithic structure having support and gas separation layers of the same copolymer. For example, the asymmetric hollow-fiber membrane may comprise a gas separation layer made of a PEBA copolymer or a composition comprising a PEBA copolymer on the inner side of the membrane and a support layer made of the same PEBA copolymer or the same composition on the outer side of the membrane. Alternatively, the asymmetric hollow-fiber membrane may comprise a gas separation layer made of a PEBA copolymer or a composition comprising a PEBA copolymer on the outer side of the membrane and a support layer made of the same PEBA copolymer or the same composition on the inner side of the membrane.

In other embodiments, the support layer and the gas separation layer may be made of different copolymers as described above, or different compositions comprising different copolymers as described above. For example, the asymmetric hollow-fiber membrane may comprise a gas separation layer made of a PEBA copolymer or a composition comprising a PEBA copolymer on the inner side of the membrane and a support layer made of a different PEBA copolymer or a different composition on the outer side of the membrane. Alternatively, the asymmetric hollow-fiber membrane may comprise a gas separation layer made of a PEBA copolymer or a composition comprising a PEBA copolymer on the outer side of the membrane and a support layer made of a different PEBA copolymer or a different composition on the inner side of the membrane.

When the copolymer of the support layer is different from the copolymer of the gas separation layer, the weight proportion of the polyamide blocks of the copolymer of the support layer may be different from the weight proportion of the polyamide blocks of the copolymer of the gas separation layer. The weight proportion of the polyamide blocks of copolymers may be determined by NMR (nuclear magnetic resonance) analysis.

In certain embodiments, the weight proportion of the polyamide blocks of the copolymer of the support layer may be from more than 0 to 80 %, for example, from 1% to 5%, from 5% to 10%, from 10% to 20%, from 20% to 30%, from 30% to 40%, from 40% to 50%, from 50% to 60%, from 60% to 70%, or from 70% to 80% higher or lower, preferably higher, than the weight proportion of the polyamide blocks of the copolymer of the gas separation layer.

In certain embodiments, the copolymer of the support layer may have a weight ratio of the polyamide blocks to the polyether blocks of from 90/10 to 50/50, and the copolymer of the gas separation layer may have a weight ratio of the polyamide blocks to the polyether blocks of from 90/10 to 10/90.

For example, the copolymer of the support layer may have a weight ratio of the polyamide blocks to the polyether blocks of from 90/10 to 80/20, 80/20 to 70/30, 70/30 to 60/40, 60/40 to 50/50, and the copolymer of the gas separation layer may have a weight ratio of the polyamide blocks to the polyether blocks of from 90/10 to 80/20, 80/20 to 70/30, 70/30 to 60/40, 60/40 to 50/50, 50/50 to 40/60, 40/60 to 30/70, 30/70 to 20/80, 20/80 to 10/90.

In certain embodiments, the asymmetric hollow-fiber membrane may further comprise a supplementary support layer. The supplementary support layer may be as described above in relation to the support layer.

In some embodiments, the support layer, the gas separation layer, and the supplementary support layer of the membrane may be made of different copolymers or different compositions comprising different copolymers, the copolymer being as described above. For example, the asymmetric hollow-fiber membrane may comprise a gas separation layer on the inner side of the membrane, a supplementary support layer on the outer side of the membrane, and a support layer between the gas separation layer and the supplementary support layer. Alternatively, the asymmetric hollow-fiber membrane may comprise a gas separation layer on the outer side of the membrane, a supplementary support layer on the inner side of the membrane, and a support layer between the gas separation layer and the supplementary support layer.

In other embodiments, the support layer, the gas separation layer and the supplementary support layer of the membrane may be made of different compositions comprising the same copolymer.

In other embodiments, the support layer and the gas separation layer may be made of the same copolymer as described above, or the same composition as described above, and the supplementary support layer may be made of a different copolymer or a different composition comprising a different copolymer. For example, the asymmetric hollow-fiber membrane may comprise gas separation and support layers made of the same PEBA copolymer or the same composition comprising the same PEBA copolymer on the inner side of the membrane and a supplementary support layer made of a different PEBA copolymer or a different composition comprising a different PEBA copolymer on the outer side of the membrane, with the support layer between the gas separation layer and the supplementary support layer. Alternatively, the asymmetric hollow-fiber membrane may comprise gas separation and support layers made of the same PEBA copolymer or the same composition comprising the same PEBA copolymer on the outer side of the membrane and a supplementary support layer made of a different PEBA copolymer or a different composition comprising a different PEBA copolymer on the inner side of the membrane, with the support layer between the gas separation layer and the supplementary support layer.

In other embodiments, the support layer and the supplementary support layer may be made of the same copolymer as described above, or the same composition as described above, and the gas separation layer may be made of a different copolymer or a different composition.

In other embodiments, the gas separation layer and the supplementary support layer may be made of the same copolymer as described above, or the same composition as described above, and the support layer may be made of a different copolymer or a different composition.

The weight proportion of the polyamide blocks of the copolymer of the supplementary support layer may be different from the weight proportion of the polyamide blocks of the copolymer(s) of the gas separation layer and/or the support layer.

In certain embodiments, especially when the support layer and the gas separation layer are made of the same copolymer or the same composition, the weight proportion of the polyamide blocks of the copolymer of the supplementary support layer may be from more than 0 to 80 %, for example, from 1% to 5%, from 5% to 10%, from 10% to 20%, from 20% to 30%, from 30% to 40%, from 40% to 50%, from 50% to 60%, from 60% to 70%, or from 70% to 80% higher or lower, preferably higher, than the weight proportion of the polyamide blocks of the copolymer of the gas separation layer and the support layer.

In certain embodiments, the copolymer of the supplementary support layer may have a weight ratio of the polyamide blocks to the polyether blocks of from 90/10 to 50/50, and the copolymer of the gas separation layer and the support layer may have a weight ratio of the polyamide blocks to the polyether blocks of from 90/10 to 10/90.

For example, the copolymer of the supplementary support layer may have a weight ratio of the polyamide blocks to the polyether blocks of from 90/10 to 80/20, 80/20 to 70/30, 70/30 to 60/40, 60/40 to 50/50, and the copolymer of the gas separation layer and the support layer may have a weight ratio of the polyamide blocks to the polyether blocks of from 90/10 to 80/20, 80/20 to 70/30, 70/30 to 60/40, 60/40 to 50/50, 50/50 to 40/60, 40/60 to 30/70, 30/70 to 20/80, 20/80 to 10/90.

The asymmetric hollow-fiber membrane comprising two layers of a gas separation layer and a support layer, and the asymmetric hollow-fiber membrane comprising three layers of a gas separation layer, a support layer, and a supplementary support layer have been described above. However, it is noted that the asymmetric hollow-fiber membrane may comprise two or more gas separation layers, and/or two or more support layers. For example, the asymmetric hollow-fiber membrane may comprise two, three, four, or five gas separation layers on the inner side of the membrane and/or two, three, four, or five support layers on the outer of the membrane. Alternatively, the asymmetric hollow-fiber membrane may comprise two, three, four, or five gas separation layers on the outer side of the membrane and/or two, three, four, or five support layers on the inner side of the membrane.

The asymmetric hollow-fiber membrane may be a composite membrane. For example, the composite membrane may comprise at least one support layer and at least one gas separation layer, the support layer and the gas separation layer being made of a composition comprising the copolymer as described above, and at least one another porous, microporous or nanoporous support layer, such as nonwoven polypropylene or any polymeric framework, on top of the support layer. The another porous, microporous or nanoporous support layer may constitute the most external layer, either on the inner side or outer side of the membrane. Additionally, or alternatively, the composite membrane may comprise at least one support layer and at least one gas separation layer, the support layer and the gas separation layer being made of a composition comprising the copolymer as described above, and at least one another gas separation layer, such as a PDMS layer, on top of the gas separation layer. The another gas separation layer may constitute the most external layer, either on the inner side or outer side of the membrane.

The invention also relates to the use of the asymmetric hollow-fiber membrane as described above for gas separation.

The membrane may be a gas separation membrane for recovering greenhouse gases, in particular $CO_2$.

The gas separation may comprise separating $CO_2$ from $N_2$ in post-combustion process.

*Process for preparing an asymmetric hollow-fiber membrane*

The invention also relates to a process for producing the asymmetric hollow-fiber membrane as described above for gas separation.

The process according to the invention comprises:

a) supplying at least one polymer solution comprising the above-defined copolymer dissolved in a solvent,
b) supplying a bore fluid,
c) co-extruding the at least one polymer solution and the bore fluid downwardly into a coagulation bath, the polymer solution entirely surrounding the bore fluid,

d) recovering the asymmetric hollow-fiber membrane solidified in the coagulation bath, and

e) drying the recovered asymmetric hollow-fiber membrane by solvent exchange or by lyophilization.

*a) Supplying at least one polymer solution*

The solvent is chosen from N-methyl-2-pyrrolidone (NMP), N,N-dimethylformamide, N,N-dimethylacetamide, dimethyl sulfoxide, triethyl phosphate, dihydrolevoglucosenone (Cyrene™), triethylene glycol diacetate, 1-butylpyrrolidin-2-one (TamiSolve™ or EMPLURA®), tetrahydrofuran (THF), 2-methyl tetrahydrofuran, or their mixtures.

The concentration of the polymer solution may be from 10 to 40 wt%, for example, from 10 to 15 wt%, from 15 to 20 wt%, from 20 to 25 wt%, from 25 to 30 wt%, from 30 to 35 wt%, from 35 to 40 wt%.

The polymer concentration within the above ranges allows for a pressure-stable hollow-fiber membranes while alleviating smaller pore formation.

The polymer solution(s) may further comprise an additive, preferably lithium chloride (LiCl) and/or PEG.

The PEG as the additive may have a different or the same molecular weight from the polyether blocks of the copolymers as defined above.

The PEG used as an additive in the polymer solution(s) may have a molecular weight of from 300 to 35,000 g/mol, for example, from 300 to 1,000 g/mol, from 1,000 to 3,000 g/mol, from 3,000 to 5,000 g/mol, from 5,000 to 8,000 g/mol, from 8,000 to 12,000 g/mol, from 12,000 to 18,000 g/mol, from 18,000 to 25,000 g/mol, from 25,000 to 35,000 g/mol.

The presence of PEG as an additive in the polymer solution(s) can provide larger pores and a better surface porosity and reduce the shrinkage of the resulting asymmetric hollow-fiber membrane after the drying step, indicating that the pore collapse can be minimized.

Preferably, the polymer solution comprises PEG when it forms a support layer.

The presence of LiCl can enhance the fluidity of the polymer solution(s), by effectively minimizing polymer gelation.

The concentration of the additive(s) may be from 1 to 10 wt%, for example, from 1 to 2 wt%, from 2 to 3 wt%, from 3 to 4 wt%, from 4 to 5 wt%, from 5 to 6 wt%, from 6 to 7 wt%, from 7 to 8 wt%, from 8 to 9 wt%, from 9 to 10 wt%.

*b) Supplying a bore fluid*

The term "bore fluid" means a fluid which is extruded with the polymer solution for forming a "bore" (in other words, the "hollowness" (empty space) of the resulting hollow-fiber membrane).

In certain embodiments, the bore fluid comprises water. Advantageously, the bore fluid may further comprise a solvent. The solvent may be as described above. Preferably, the solvent of the bore fluid is the same as the solvent of the polymer solution to be extruded together.

The ratio of the water to the solvent (water/solvent) of the bore fluid may be from 20/80 to 100/0 by weight, for example, from 20/80 to 30/70, from 30/70 to 40/60, from 40/60 to 50/50, from 50/50 to 60/40, from 60/40 to 70/30, from 70/30 to 80/20, from 80/20 to 90/10, or from 90/10 to 100/0 by weight.

A water content higher than the solvent in the bore fluid may be beneficial in accelerating phase separation and favoring the formation of a gas separation layer inside the bore (lumen) of the resulting asymmetric hollow-fiber membrane.

*c) Co-extruding the polymer solution and the bore fluid into a coagulation bath*

The term "coagulation bath" means a liquid bath comprising a substance that makes the nascent hollow-fiber membrane coagulate.

Advantageously, the coagulation bath comprises, or preferably is, water.

In certain embodiments, the coagulation bath may further comprise the solvent as described above or ethanol in an amount of 10 to 50 wt%.

The temperature of the coagulation bath may be from 15 to 80°C, for example from 15 to 20°C, from 20 to 30°C, from 30 to 40°C, from 40 to 50°C, from 50 to 60°C, from 60 to 70°C, from 70 to 80°C.

A lower coagulation bath temperature may be beneficial in accelerating coagulation.

In the process according to the invention, the polymer solution and the bore fluid may be co-extruded, using any extrusion device that allows the polymer solution and the bore fluid to be co-extruded downwardly into a coagulation bath, said polymer solution entirely surrounding the bore fluid.

The phrase "the polymer solution entirely surrounding the bore fluid" means that the polymer solution encircles the bore fluid while it is co-extruded with the bore fluid.

For example, the extrusion device may be a spinneret, a coaxial needle, or an annular die, preferably a spinneret.

In certain embodiments, the polymer solution and the bore fluid may be co-extruded via a pump (preferably two pumps, one pump for the polymer solution and the other pump for the bore fluid) for creating the flow of the polymer solution and/or the bore fluid.

The temperature of the extrusion device may be from 15 to 80°C, for example, from 15 to 20 °C, from 20 to 30 °C, from 30 to 40 °C, from 40 to 50 °C, from 50 to 60 °C, from 60 to 70 °C, from 70 to 80 °C.

The flow rate (extrusion rate) of the polymer solution may be from 2 to 500 mL/h, preferably 100 to 500 mL/h, for example, from 2 to 100 mL/h, from 100 to 150 mL/h, from 150 to 200 mL/h, from 200 to 250 mL/h, or from 250 to 300 mL/h.

The flow rate of the bore fluid may be from 50 to 150 mL/h, preferably from 60 to 100 mL/h.

The flow rate can control the thickness of the resulting membrane. The flow rate within the above range allows the resulting membrane to be thin yet self-supporting.

The extrusion temperature of the polymer solution may be from 15 to 80°C, for example, from 15 to 20 °C, from 20 to 30 °C, from 30 to 40 °C, from 40 to 50 °C, from 50 to 60 °C, from 60 to 70 °C, from 70 to 80 °C.

The flow ratio of the flow rate of the polymer solution to the flow rate of the bore fluid may be from 5/1 to 2/1, preferably from 4/1 to 2/1.

The temperature of the step of the co-extruding the polymer solution and the bore fluid may be from 15 to 80°C, for example, from 15 to 20 °C, from 20 to 30 °C, from 30 to 40 °C, from 40 to 50 °C, from 50 to 60 °C, from 60 to 70 °C, from 70 to 80 °C.

A lower co-extrusion temperature (or spinning temperature) may lead to more stable pores after the drying step (which will be explained later), presumably because the resulting pores are larger in the wet state.

In some embodiments, the step of co-extruding may be performed via an air gap. The term "air gap" means an air space between the point where the polymer solution and the bore fluid are co-excluded and the surface of the coagulation bath.

The air gap may be covered by a protective barrier or a cover, such as an enclosure, a hood, or a chimney.

The distance of the air gap may more than 0 cm and 50 cm or less. For example, the distance of the air gap may be from 1 to 5 cm, 5 to 10 cm, 10 to 15 cm, 15 to 20 cm, 20 to 25 cm, 25 to 30 cm, 30 to 35 cm, 35 to 40 cm, 40 to 45 cm, or 45 to 50 cm.

The humidity in the air gap may be from 0 to 100% RH (Relative Humidity). For example, the humidity in the air gap may be from 0 to 10%, from 10 to 20%, from 20 to 30%, from 30 to 40%, from 40 to 50%, from 50 to 60%, from 60 to 70%, from 70 to 80%, from 80 to 90%, or from 90 to 100%.

The humidity in the air gap can promote pore formation from the outer surface towards the inner surface of the asymmetric hollow-fiber membrane. Thus, depending on the arrangement of the support layer and gas separation layer within the asymmetric hollow-fiber membrane (for example, the support layer may be positioned on the inner side or the outer side of the asymmetric hollow-fiber membrane).

Additionally, or alternatively, a stream of dry gas (such as dry $N_2$) may be applied in the air gap. The dry gas can promote solvent evaporation and polymer densification. Thus, a stream of dry gas may be advantageously applied especially when the gas separation layer is positioned on the outer side of the asymmetric hollow-fiber membrane.

*d) Recovering the asymmetric hollow-fiber membrane solidified*

The asymmetric hollow-fiber membrane solidified in the coagulation bath may be recovered, using a take-up drum, for example. In this case, the take-up rate may be from 5 to 50 m/min (meter per minute), for example, from 5 to 10 m/min, from 10 to 20 m/min, from 20 to 30 m/min, from 30 to 40 m/min, or from 40 to 50 m/min.

The take-up rate may be controlled depending on the target membrane dimension (i.e., thickness of the resulting asymmetric hollow-fiber membrane). For example, the thickness may be proportionally decreased by increasing the take-up rate.

*e) Drying the recovered asymmetric hollow-fiber membrane*

The process according to the invention comprises drying the recovered asymmetric hollow-fiber membrane by solvent exchange or by lyophilization, preferably by lyophilization.

The lyophilization may be carried out by freezing and sublimation under vacuum. The freezing may be carried out at least for 24 h and at a temperature of -196°C (for example, in a liquid nitrogen) to -5°C, for example, from -100°C to -90°C, from -90°C to -80°C, from -80°C to -70°C, from -70°C to -60°C, or from - 60°C to -50°C. The sublimation may be carried out at least for 24 h and at a temperature of from -50°C to -5°C, for example, from -50°C to -40°C, from -40°C to -30°C, from -30°C to -20°C, from -20°C to -10°C, or from -10°C to -5°C.

The sublimation may be carried out at a pressure of from 0.01 to 4.5 mbar, for example 0.03 to 4.02 mbar. The vacuum level during the sublimation may be adjusted appropriately depending on the sublimation temperature. Preferably, the vacuum level is equal to or lower than the vapor pressure at a given sublimation temperature. As an example, at a sublimation temperature of -10°C and at a water vapor pressure of 2.56 mbar, sublimation may be carried out at a pressure (the vacuum level) of 0.630 mbar.

Lower temperature during the freezing and sublimation step of lyophilization may result in more pores which are prone to keep open.

Advantageously, the drying by solvent exchange may be performed in consecutive baths.

For example, the solvent exchange is performed with either water/acetonitrile/hexane or water/dimethoxymethane/hexane.

In some embodiments, especially when the asymmetric hollow-fiber membrane comprises two layers of different copolymers/compositions, i.e., a support layer of a copolymer or a composition as described above, and a gas separation layer of a different copolymer or a different composition as described above, or when the asymmetric hollow-fiber membrane comprises three layers, *i.e.,* a support layer and a gas separation layer of the same copolymer or the same composition as described above, and another supplementary support layer of a different copolymer or composition, as described above, in the process, the step of supplying at least one polymer solution may comprise supplying two different polymer solutions, each comprising the above-defined copolymer dissolved in a solvent, the copolymers of the two polymer solutions being different from each other or the same. When the copolymers of the two different polymer solutions are the same, the polymer solutions differ from each other in the composition, such as the solvent, the absence or presence of an additive, concentration of the polymer, and so on.

The solvent may be as described above. Preferably, the solvents of the two different polymer solutions are the same.

When two polymer solutions are co-extruded, the outer polymer solution, which entirely surrounds both the other inner polymer solution and the bore fluid, constitutes a layer of a copolymer disposed on the outer side of the asymmetric hollow-fiber membrane, and the inner polymer solution, which entirely surrounds the bore fluid, constitutes a layer of a different copolymer disposed on the inner side of the asymmetric hollow-fiber membrane.

For example, an inner polymer solution may constitute a gas separation layer and the outer polymer solution may constitute a support layer of the membrane, or an inner polymer solution may constitute a support layer and the outer polymer solution may constitute a gas separation layer of the membrane. Alternatively, an inner polymer solution may constitute a gas separation layer and a support layer, and the outer polymer solution may constitute a supplementary support layer of the membrane. Alternatively, an inner polymer solution may constitute a supplementary support layer, and the outer polymer solution may constitute a gas separation layer and a support layer of the membrane.

When the two different polymer solutions are co-extruded, the flow rate (extrusion rate) of the polymer solutions may be from 2 to 500 mL/h. The flow rates can control the thickness of each layer of the polymer solution. Preferably, the flow rate of the polymer solutions are different. For example, in the case of the asymmetric hollow fiber membrane comprising a gas separation and a support layer made of different copolymers or different compositions, regardless of whether the gas separation layer is on the inner side or on the outer side, the flow rate of the gas separation layer may be from 2 to 100 mL/h, preferably from 2 to 50 mL/h while the flow rate of the support layer may be from 100 to 500 mL/h, preferably from 150 to 300 mL/h. Alternatively, the flow rate of the gas separation layer may be from 100 to 500 mL/h, preferably from 150 to 300 mL/h while the flow rate of the support layer may be from 2 to 100 mL/h, preferably from 2 to 50 mL/h. Preferably, regardless of whether the gas separation layer is on the inner side or on the outer side, the flow rate of the gas separation layer is lower than the flow rate of the support layer.

The flow rate of the bore fluid may be from 50 to 150 mL/h, preferably from 60 to 100 mL/h.

The flow ratio of the total flow rate of the different polymer solutions to the flow rate of the bore fluid may be from 5/1 to 2/1, preferably from 3/1 to 2/1.

Preferably, the flow rates ratio are as follows according to the formula:

$$(Q_{outer\ dope} + Q_{inner\ dope})/Q_{bore} = 2/1\ to\ 4/1,$$

wherein

- Qouter dope means the flow rate of the polymer solution forming the layer on the outer side of the membrane,
- Qinner dope means the flow rate of the polymer solution forming the layer on the inner side of the membrane,
- Qbore means the flow rate of the bore fluid.

In a first embodiment, the flow rate of gas separation layer is from 2 to 500 mL/hr and the flow rate of support layer is from 2 to 500 mL/hr.

In a second embodiment, the flow rate of gas separation layer is from 2 to 100 mL/hr, preferably from 2 to 50 mL/hr and the flow rate of support layer is from 100 to 500 mL/hr, preferably from 150 to 300 mL/hr.

In a third embodiment, the flow rate of gas separation layer is from 100 to 500 mL/hr, preferably from 150 to 300 mL/hr and the flow rate of support layer is from 2 to 100 mL/hr, preferably from 2 to 50 mL/hr.

The process as described above explains the production of an asymmetric hollow-fiber membrane comprising one layer of a copolymer or two layers of copolymers; however, it is understood that the process according to the invention encompasses the production of an asymmetric hollow-fiber membrane comprising two or more layers of copolymers.

## DESCRIPTION OF THE FIGURES

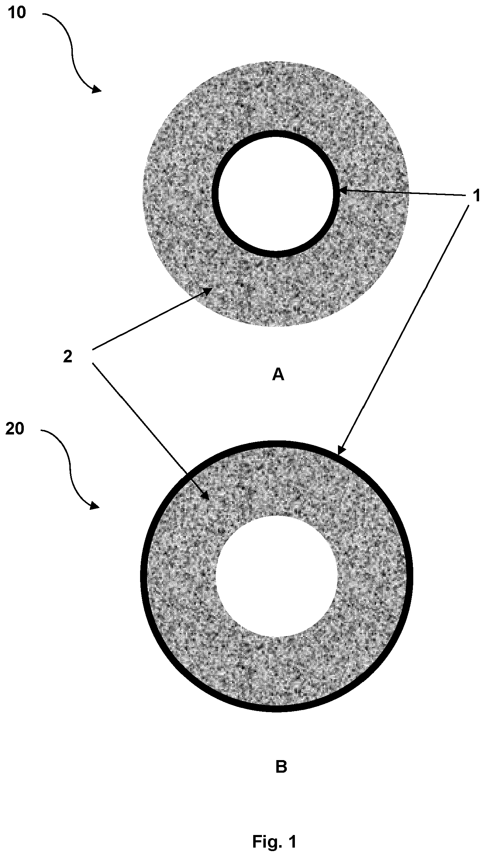

**FIG. 1** schematically illustrates cross-sections of two examples of the asymmetric hollow-fiber membrane according to the invention, taken in the direction perpendicular to the longitudinal axis of the membrane.

As shown in **FIG. 1A,** the asymmetric hollow-fiber membrane **10** comprises a gas separation layer **1** and a support layer **2** made of the copolymer as described above. The gas separation layer **1** and the support layer **2** may be made of the same copolymer or the same composition comprising the copolymer, or may be made of different copolymers or different compositions comprising different copolymers or the same polymer.

The support layer **2** may be positioned on the outer side of the asymmetric hollow-fiber membrane **10** and the gas separation layer **1** may be positioned on the inner side of the asymmetric hollow-fiber membrane **10**.

In another example, as shown in **FIG. 1B,** the support layer **2** may be positioned on the inner side of the asymmetric hollow-fiber membrane **20** and the gas separation layer **1** may be positioned on the outer side of the hollow-fiber membrane **20**.

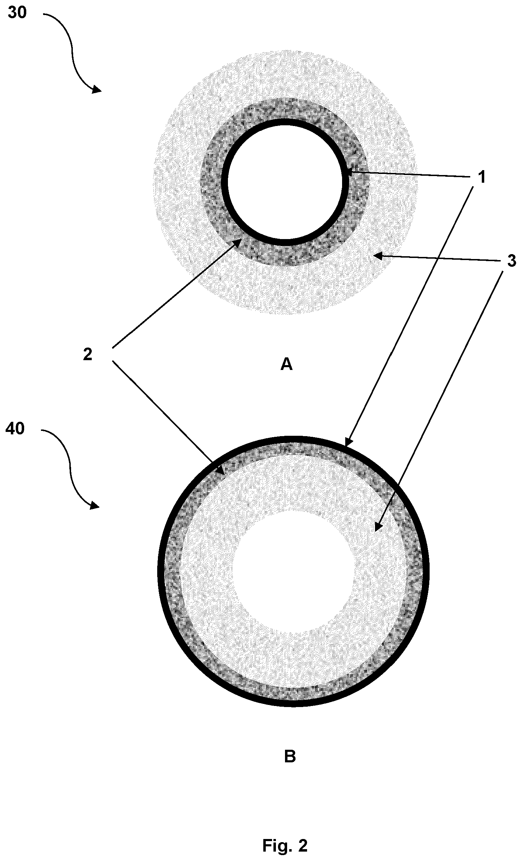

**FIG. 2** schematically illustrates cross-sections of other two additional examples of the asymmetric hollow-fiber membrane according to the invention, taken in the direction perpendicular to the longitudinal axis of the membrane.

As shown in **FIG. 2A,** the asymmetric hollow-fiber membrane **30** comprises three layers **1, 2** and **3,** wherein the copolymer of one layer **3** and the copolymer of the other layers **1** and **2** are different. The layer **1** may be a gas separation layer, and the layer **2** may be a support layer. The gas separation layer **1** and the support layer **2** may be layers of the same copolymer as described above. The layer **3** may be a supplementary support layer of a copolymer as described above, which is different from the copolymer of the gas separation layer **1** and support layer **2**. For example, the copolymer of the supplementary support layer **3** may have a higher weight ratio of the polyamide blocks to the polyether blocks than the copolymer of the gas separation layer **1** and support layer **2**. In this example, the supplementary support layer **3** is disposed on the outer side of the asymmetric hollow-fiber membrane. In other words, the gas separation layer **1** and the support layer **2** are disposed on the inner side of the asymmetric hollow-fiber membrane.

Alternatively, as shown in **FIG. 2B,** the supplementary support layer **3** may be disposed on the inner side of the asymmetric hollow-fiber membrane **40**. In other words, the gas separation layer **1** and the support layer **2** are disposed on the inner side of the asymmetric hollow-fiber membrane **40**).

**FIG. 3** schematically illustrates the process according to the invention. An enlarged view of the co-extrusion step through a spinneret is shown on the left side of **FIG. 3** (inside a rectangle).

**FIG. 3** schematically illustrates the process according to the invention. **FIG. 3a** shows co-extrusion of one polymer solution. An enlarged view of the co-extrusion step through a double spinneret is shown on the left side of **FIG. 3a** (inside a rectangle). In this enlarged view, **A** shows the cross-section of the spinneret, taken in the direction perpendicular to the flow direction inside the spinneret; **B** shows the cross-section of the spinneret, taken along the flow direction inside the spinneret; and **C** shows the cross-section of a nascent hollo-fiber membrane, taken in the direction perpendicular to the flow direction inside the spinneret.

The polymer solution **4** and the bore fluid **5** are co-extruded via a pump **4'** for creating the flow of the polymer solution and a pump **5'** for creating the flow of the bore fluid, respectively. They are co-extruded, using a double spinneret **6,** downwardly into a coagulation bath **7** via an air gap **8.**

As shown in the enlarged view of the co-extrusion step on the left side of **FIG. 3a** (inside the rectangle), the bore fluid **5** is extruded through the bore of the spinneret **6,** and the polymer solution **4** is co-extruded with the bore fluid **5** in a way that the polymer solution **4** entirely surrounds the bore fluid **5 (B).**

The stream of $N_2$ **10** may be applied in the air gap, for example, using a flow controller.

The air gap may be covered by a chimney **8'.**

The asymmetric hollow-fiber membrane solidified in the coagulation bath may be then collected on a take-up drum **9.** The take-up drum **9** may be in a bath of a washing solution.

In this example, the take-up drum may be used to control the flow of the nascent hollow-fiber membrane and of the solidified asymmetric hollow-fiber membrane.

It is understood that, in another variant, the nascent hollow-fiber membrane may be allowed to free-fall into the water coagulation bath, and then to be left in the bath for a certain duration to solidify. The solidified asymmetric hollow-fiber membrane may be collected directly from the bath with a drum.

During and upon collecting the solidified asymmetric hollow-fiber membrane, a washing solution **11** may be showered on the solidified asymmetric hollow-fiber membrane.

In **FIG. 3b,** an enlarged view of the co-extrusion step through a triple spinneret is shown on the left side (inside a rectangle). In this enlarged view, **A** shows the cross-section of the spinneret, as in **A** of **Fig. 3a; B** shows the cross-section of the spinneret, as in **B** of **Fig. 3a;** and **C** shows the cross-section of a nascent hollo-fiber membrane, as in **C** of **Fig. 3a.**

**FIG. 3b** shows co-extrusion of two polymer solutions 4 and 41. The polymer solution **4,** the polymer solution **41** and the bore fluid **5** are co-extruded via a pump **4'** for creating the flow of the polymer solution **4,** a pump **41'** for creating the flow of the polymer solution **41,** and a pump **5'** for creating the flow of the bore fluid, respectively. They are co-extruded, using a triple spinneret **6',** downwardly into a coagulation bath **7** via an air gap **8.**

As shown in the enlarged view of the co-extrusion step on the left side of **FIG. 3b** (inside the rectangle), the bore fluid **5** is extruded through the bore of the spinneret **6',** and the polymer solutions **4** and **41** are co-extruded with the bore fluid **5** in a way that the polymer solutions **4** and **41** entirely surround the bore fluid **5 (B).**

The stream of N$_2$ **10** may be applied in the air gap, for example, using a flow controller.

The downstream conditions after the co-extrusion, such as the conditions for recovering the asymmetric hollow-fiber membrane solidified in the coagulation bath may be as described above in relation to **Fig. 3a.**

The resulting nascent hollo-fiber membrane **(C)** comprises a gas separation layer **1** made of the polymer of the polymer solution **41** and a support layer **2** made of the polymer of the polymer solution **4.** It is understood that in other embodiments, the resulting nascent hollo-fiber membrane **(C)** may comprise a gas separation layer **1** on the inner side and a support layer **2** on the outer side.

**FIG. 3b** illustrates the membrane in which the polymer solutions constitute either one of the support layer or the gas separation layer **1.** However, it is to be understood that in other embodiments, a polymer solution may constitute a support layer and a gas separation layer. For example, the polymer solution **41** may constitute a support layer and a gas separation layer while the polymer solution **4** may constitute a supplementary support layer; or the polymer solution **4** may constitute a support layer and a gas separation layer while the polymer solution **41** may constitute a supplementary support layer.

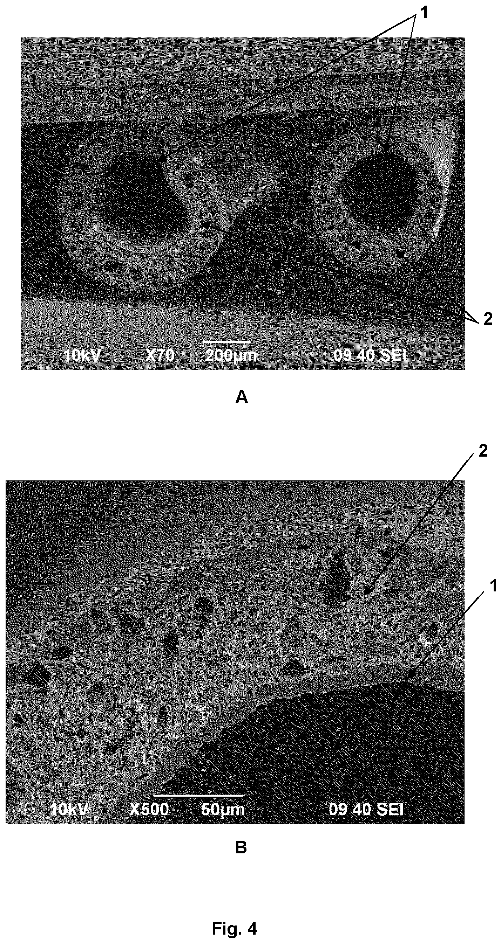

**FIG. 4A** shows scanning electronic microscope (SEM) images of the cross-section of asymmetric hollow-fiber membrane, taken in the direction perpendicular to the longitudinal axis of the membrane; **FIG. 4B** shows an enlarged section of **FIG. 4A.**

**EXAMPLES**

The examples that follow illustrate the invention without limiting it.

*Preparation of copolymers*

Various copolymers containing polyamide blocks and flexible blocks were prepared according to the composition shown in the following table.

Table 1: Composition of PEBA copolymers

| No. | Structure | Input (g) | | | | | |
|---|---|---|---|---|---|---|---|
| | | PA11 | DA10 | DC36 | PEG | Irganox 1010 | Zr(OBu)$_4$ |
| 1 | 11/PEG | 953 | - | 1162 | 2970 | 10 | 17.7 |
| 2 | 11/10.36/ PEG | 940 | 652 | 2562 | 1000 | 10 | 6.3 |

In Table 1:

- the input is expressed in grams,
- PA11 corresponds to polyamide 11 (11-aminoundecanoic acid),
- DA10 corresponds to diamine containing 10 carbon atoms (1,10-diaminodecane);
- DC36 corresponds to dicarboxylic acid containing 36 carbon atoms (Pripol® 1009);
- PEG corresponds to PolyEthylenGlycol available under the trademark Pluriol® E1500 by the company BASF.
- Irganox 1010 corresponds to an anti-oxidant (BASF); and
- Zr(OBu)$_4$ corresponds to a catalyst for polymerization reactions.

Table 2 shows the characterization of PEBA copolymer:

The table 2: Characterization of PEBA copolymers:

| PEBA No. | Structure | Mn-PA | Mn-PEG | C36/ PA | Tm (°C) |
|---|---|---|---|---|---|
| 1 | 11 /PEG | 1000 | 1500 | 57% | 122 |

(continued)

| PEBA No. | Structure | Mn-PA | Mn-PEG | C36/ PA | Tm (°C) |
|---|---|---|---|---|---|
| 2 | 11/1 0.36/PEG | 6000 | 1500 | 62% | 107 |

In Table 2:

- Mn-PA corresponds to the number-average molecular weight of the polyamide blocks;
- Mn-PE corresponds to the number-average molecular weight of the polyethylene glycol (PEG);
- C36/PA corresponds to the weight ratio of the C36 aliphatic dicarboxylic acid to the total weight of polyamide blocks (C36 used as a chain limiter in PEBA No.1);
- Tm corresponds to the melting point (°C) of the copolymer.

*Preparation of polymer solutions*

Polymer solutions for preparing an asymmetric hollow-fiber membrane were prepared.

The compositions of the polymer solution of PEBA No. 1 is as follows.

- Concentration of PEBA No. 1: 22 wt%
- Solvent: NMP (76.4 wt%)
- Other components: LiCl 1 (1 wt%) and $H_2O$ (0.5%)

First, LiCl and $H_2O$ were dissolved in NMP inside a jar, then PEBA No. 1 was added, and the jar was closed. The mixture was mixed under rotation on a roller for 24 h at 40 °C while polymer was swelled. The mixture was then kept at 80 °C overnight and the polymer was dissolved completely (in 2h). Afterwards the mixture was again subjected to rotation on the roller at 40 °C for a few days. At this temperature, the solution exhibited fluidity.

The compositions of the polymer solution of PEBA No. 2 is as follows.

- Concentration of PEBA No. 2: 20 wt%
- Solvent: NMP (72.9 wt%)
- Other components: PEG 1500 (6 wt%) and LiCl 1 (1.1 wt%)

First, LiCl and PEG 1500 were dissolved in NMP. Once dissolved, the polymer PEBA No. 2 was added, and the mixture was heated to 100 °C for 4 h under continuous stirring with an overhead stirrer. After 2 hours the polymer was completely dissolved. The mixture was left under stirring at 80 °C overnight. The solution was stored at 50 °C for 24h.

Both polymer solutions were kept in the syringe pump of a spinning device for 48 h at 60 °C to degas adsorbed air before spinning. At this temperature, the solutions exhibited fluidity.

*Preparation of asymmetric hollow-fiber membranes*

An asymmetric hollow-fiber membranes (Example 3) comprising a layer of the copolymer PEBA No. 1 (on the inner side) and a layer of the copolymer PEBA No. 2 (on the outer side) were prepared according to the process as described above.

In the example, the copolymer PEBA No. 2 having a higher PA content than the copolymer PEBA No. 1 was used as a support layer while the copolymer PEBA No. 1 was used as a gas separation layer.

The parameters and the conditions of the process are as follows:

- Flow rate of PEBA No. 1 solution (inner layer): 20 mL/h
- Temperature of PEBA No. 1 solution (inner layer): 60°C
- Flow rate of PEBA No. 2 solution (outer layer): 160 mL/h
- Temperature of PEBA No. 2 solution (outer layer): 60°C
- Composition of bore fluid: $H_2O$/NMP (80/20)
- Flow rate of bore fluid: 60 mL/h
- Temperature of the spinneret: 50.2°C
- Temperature of the coagulation bath: 38.8°C
- Height of the air gap: 1.5 cm, without chimney
- The application of dry gas in the air gap: Absent

- Collection: take-up drum at a rate of 8 m/min
- Drying: lyophilization (also called freeze drying) by two steps (the first step of freezing at -80 °C for 24h, and the second step of ice sublimation at -10 °C and 0.6 mbar for 24h).
- Humidity during the experiment: 50 to 60%
- Temperature during the experiment: 24 to 27°C

*Measurement of $CO_2$ permanence*

The term "permeability" or "permeance" of the membrane refers to a measure of how easily a substance (in this application, gas) can pass through a membrane. Such membrane can be either dense and symmetric along the cross section, usually a dense film, or an asymmetric (hollow-fiber) film with dense and porous parts. The permeability expressed in Barrer corresponds to the permeability of a dense film with known thickness at a given temperature and pressure point, for example 35°C and 3 bar.

The permeability of a membrane (in Barrer) can be calculated according to the following formula:

$$10^{-10} \times ((cm^3{}_{STP} \times cm)/(s \times cm^2 \times cmHg))$$

The permeance expressed in GPU corresponds to the permeability of an asymmetric (hollow-fiber) membrane at a given temperature and pressure point, for example 35°C and 3 bar.

The permeance of an asymmetric membrane (in GPU) can be calculated according to the following formula:

$$10^{-6} \times ((cm^3{}_{STP})/(s \times cm_2 \times cmHg)).$$

In the above formulas, the "$cm^3{}_{STP}$" corresponds to standard cubic centimeter (a unit of amount of gas), representing the number of gas molecules (mol) that would occupy one cubic centimeter at standard temperature and pressure, as calculated via the ideal gas law. The "cm" corresponds to the thickness of the membrane whose permeability is being evaluated. The "$cm^2$" corresponds to the area of the surface of the gas separation layer. Thus, the "$cm^3{}_{STP} / (cm^2 \times s^1)$" ($cm^3{}_{STP} \cdot cm^{-2} s^{-1}$) corresponds to the flux of gas through the membrane, and the cmHg to the pressure drop across the material.

For example, assuming that the support layer does not exhibit resistance to gas transport, an asymmetric membrane having a gas separation layer with a thickness of 1 $\mu$m ($10^{-4}$ cm) made of a polymer with intrinsic permeability of 1 Barrer, has a permeance of 1 GPU, according to the following equation:

$$1 \text{ GPU} = 1 \text{ Barrer}/10^{-4} \text{ cm}$$
$$= (10^{-10} \times ((cm^3{}_{STP} \times cm)/(s \times cm_2 \times cmHg))) \times 10^4 \text{ cm}^{-1}$$
$$= 10^{-6} \times ((cm^3{}_{STP} \times cm)/(s \times cm_2 \times cmHg))$$

The flux of gas through the membrane at 35°C, at 2 bar(a) (absolute pressure) of feed side pressure, and at 1 bar(a) of permeate side pressure was determined according to a gas permeability method. Specifically, the membrane was placed in a permeation module, and the dense surface of the membrane was flushed with a test gas. The flow rate of the gas stream diffusing through the membrane to the permeate side was analyzed by a thermal mass flow meter. The flux was calculated by dividing the flow rate by the membrane area.

The resulting asymmetric hollow-fiber membrane exhibited the following characteristics, as shown in Table 3:

Table 3: Characteristics of Example 3

| Example | OD ($\mu$m) | ID ($\mu$m) | Thickness ($\mu$m) | | $CO_2$ permeance (GPU) |
| --- | --- | --- | --- | --- | --- |
| | | | Gas separation layer | Support layer | |
| 3 | 564.5 $\pm$40.1 | 313.4 $\pm$22.4 | 10.0$\pm$1.6 | 116.1$\pm$8.9 | 67.92$\pm$3,49 |

The support layer and the gas separation layer were very well connected in the example, and kept well connected after drying.

Thus, example 3 resulted in an asymmetric hollow-fiber membrane which were thin yet self-supporting, while mainlining good level of $CO_2$ permeance.

The SEM cross-section images of resulting asymmetric hollow-fiber membranes of Example 3 are shown in **FIG. 4.**

**FIG. 4A** and **FIG. 4B** show the asymmetric hollow-fiber membrane of Example 3, comprising the layers of a gas separation layer **1** (PEBA No. 1) on the inner side of the membrane, and a support layer **2** (PEBA No. 2) on the outer side.

The SEM images in **FIG. 4B** show the presence of a porous morphology with interconnected pores and some finger-like macro pores in the support layer **2,** providing moderate resistance under pressure.

## Claims

1. An asymmetric hollow-fiber membrane for gas separation, comprising at least one support layer and at least one gas separation layer, the support layer and the gas separation layer being made of a composition comprising more than 70% by weight of a copolymer comprising polyamide blocks and flexible polyether blocks, wherein:

    - the polyether blocks comprises blocks derived from polyethylene glycol (PEG), polypropylene glycol, polytrimethylene glycol, polytetramethylene glycol or mixtures thereof, preferably polyethylene glycol,
    - the polyamide blocks comprises at least a unit derived from polycondensation of at least one lactam, of at least one aminocarboxylic acid or of at least one diamine and at least one dicarboxylic acid, and
    - the ratio of the thickness of the support layer to the thickness of the gas separation layer is from 1.49 to 10,000.

2. The asymmetric hollow-fiber membrane according to claim 1, wherein the gas separation layer has a thickness of from 0.05 to 100 $\mu$m, and the support layer has a thickness of from 149.95 to 499.95 $\mu$m.

3. The asymmetric hollow-fiber membrane according to claim 1 or 2, wherein it has an outer diameter of from 200 to 1000 $\mu$m, and an inner diameter of from 50 to 500 $\mu$m.

4. The asymmetric hollow-fiber membrane according to any one of claims 1 to 3, wherein the support layer and the gas separation layer are made of the same composition or the same copolymer.

5. The asymmetric hollow-fiber membrane according to any one of claims 1 to 3, wherein the support layer and the gas separation layer are made of different compositions or different copolymers.

6. The asymmetric hollow-fiber membrane according to any one of claims 1 to 5, wherein the polyamide blocks of the copolymer comprises an aliphatic dicarboxylic acid or a diamine comprising 36 carbon atoms.

7. The asymmetric hollow-fiber membrane according to any one of claims 1 to 6, wherein the support layer is a porous layer having a porosity of from 15 to 60%, as measured by a scanning electron microscope (SEM) image analysis.

8. The asymmetric hollow-fiber membrane according to any one of claims 1 to 7, comprising a supplementary support layer.

9. The use of the asymmetric hollow-fiber membrane as defined in any one of claims 1 to 8 for gas separation.

10. A process for producing the asymmetric hollow-fiber membrane as defined in any one of claims 1 to 8, comprising:

    a) supplying at least one polymer solution comprising the copolymer as defined in claims 1 to 8 dissolved in a solvent, wherein the solvent is chosen among N-methyl-2-pyrrolidone, N,N-dimethylformamide, N,N-dimethylacetamide, dimethyl sulfoxide, triethyl phosphate, dihydrolevoglucosenone, triethylene glycol diacetate, 1-butylpyrrolidin-2-one, tetrahydrofuran (THF), 2-methyl tetrahydrofuran, and their mixtures;
    b) supplying a bore fluid,
    c) co-extruding the at least one polymer solution and the bore fluid downwardly into a coagulation bath, the polymer solution entirely surrounding the bore fluid, and
    d) recovering the asymmetric hollow-fiber membrane solidified in the coagulation bath, and
    e) drying the recovered asymmetric hollow-fiber membrane by solvent exchange or by lyophilization.

11. The process according to claim 10, wherein the step a) of supplying at least one polymer solution comprises supplying two different polymer solutions, each polymer solution comprising a copolymer as defined in claims 1 to 8 dissolved in a solvent, the copolymers of the two polymer solutions being different from each other or the same.

12. The process according to claim 10 or 11, wherein the bore fluid comprises water, preferably the bore fluid is water and a solvent, more preferably the solvent being the same as the solvent of the polymer solution.

13. The process according to any one of claims 10 to 12, wherein the step of co-extruding is performed via an air gap, preferably the air gap having a distance of from more than 0 cm and 50 cm or less.

14. The process according to any one of claims 10 to 13, wherein the step e) of drying is carried out by solvent exchange, and the solvent exchange is performed with water/acetonitrile/hexane.

15. The process according to any one of claims 10 to 14, wherein the polymer solution comprises an additive, preferably lithium chloride and/or PEG.

16. The process according to any one of claims 10 to 15, wherein the polymer concentration of the polymer solution is from 10% to 40% by weight relative to the total weight of the polymer solution.

17. The process according to any one of claims 10 to 16, wherein the temperature of the step of the co-extruding is from 15°C to 80°C.

18. An asymmetric hollow-fiber membrane produced by the process as defined in any one of claims 10 to 17.

Fig. 1

Fig. 2

Fig. 3

A

B

Fig. 4

Europäisches
Patentamt

European
Patent Office

Office européen
des brevets

# EUROPEAN SEARCH REPORT

**Application Number**

EP 23 30 7022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H08 57274 A (NAGAYANAGI KOGYO KK; ZOUSUI SOKUSHIN CENTER; MITSUI SHIPBUILDING ENG) 5 March 1996 (1996-03-05) * paragraph [0013] - paragraph [0021] * | 1-18 | INV. B01D67/00 B01D53/22 B01D69/08 B01D71/80 D01D5/24 |
| X | JP 2010 240535 A (UNITIKA LTD; UNIV KOBE) 28 October 2010 (2010-10-28) * claims 1-4; examples 1,8,9 * | 1-18 | |
| X | WO 2021/135411 A1 (ACCUPATH MEDICAL JIAXING CO LTD [CN] ET AL.) 8 July 2021 (2021-07-08) * examples 1-6 * | 1,2,4,18 | |
| X | JP 2018 012071 A (MITSUBISHI CHEM CORP) 25 January 2018 (2018-01-25) * example 1 * | 1,2,4,18 | |
| X | KR 2009 0033733 A (KOREA RES INST CHEM TECH [KR]) 6 April 2009 (2009-04-06) * paragraph [0045] - paragraph [0046] * | 1,2,4, 10,12, 14,16-18 | TECHNICAL FIELDS SEARCHED (IPC) B01D D01F D01D |

The present search report has been drawn up for all claims

| Place of search | Date of completion of the search | Examiner |
|---|---|---|
| Munich | 15 July 2024 | Kukolka, Florian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 7022

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2024

| Patent document cited in search report | | Publication date | Patent family member(s) | | Publication date |
|---|---|---|---|---|---|
| JP H0857274 | A | 05-03-1996 | NONE | | |
| JP 2010240535 | A | 28-10-2010 | JP | 5293959 B2 | 18-09-2013 |
| | | | JP | 2010240535 A | 28-10-2010 |
| WO 2021135411 | A1 | 08-07-2021 | CN | 111040429 A | 21-04-2020 |
| | | | WO | 2021135411 A1 | 08-07-2021 |
| JP 2018012071 | A | 25-01-2018 | NONE | | |
| KR 20090033733 | A | 06-04-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 101035717 B1
- FR 2941700 A1
- EP 613919 A
- JP 2004346274 A
- JP 2004352794 A
- EP 1482011 A

### Non-patent literature cited in the description

- **LI LIU et al.** *Ind. Eng. Chem. Res.*, 2005, vol. 44 (17), 6874-6882
- Plastiques - Matériaux polyamides (PA) pour moulage et extrusion - Partie 1: Designation. *ISO standard 1874-1:2011*, 3